# EUROPEAN PATENT APPLICATION

(11) **EP 3 511 115 A1**
(43) Date of publication of application: **17.07.2019**
(21) Application number: 16915725.2
(22) Date of filing: 09.09.2016
(51) Int. Cl.: B23Q 11/00

(54) **MACHINE TOOL**

(71) Applicant: Makino Milling Machine Co., Ltd., Tokyo 152-8578 (JP)
(72) Inventor: OBA, Taku, Kanagawa 243-0303 (JP); TANGE, Keisuke, Kanagawa 243-0303 (JP); NAKAYASU, Kazumasa, Kanagawa 243-0303 (JP)
(74) Representative: McWilliams, David John
(86) International application number: PCT/JP2016/076684
(87) International publication number: WO 2018/047307

(57) **Abstract**

A machine tool (100) is equipped with: a machine body (10); a control panel (20); a peripheral device (60); a peripheral device frame (40) that is adjacent to one side surface of the machine body (10) and for which the top view of the area for installing the peripheral device (60) is roughly rectangular, wherein at least the two corners of one end of the rectangle are supported, and the corner of the other end of the rectangle that is closer to the machine body (10) is supported from below but the corner of the other end of the rectangle that is farther from the machine body (10) is not supported from below; and a coolant filtration and supply device (30) with a coolant tank (32) disposed below the peripheral device frame (40) so as to accept coolant discharged from the machine body (10), the coolant filtration and supply device (30) being installed so as to be able to move toward and away from the machine body (10).

## Description

### FIELD

The present invention relates to a machine tool having a machine body, a control panel, a coolant filtration and supply device, and peripheral devices.

### BACKGROUND

A machine tool, as described in for example PTL 1, includes, in addition to the machine body, a control panel fastened to the machine body by bolts and a coolant tank having casters enabling it to be moved close to and moved away from the machine body. A machine tool further usually includes peripheral devices such as a spindle lubricating oil temperature control device, an air dryer for cleaning pressurized air source air and removing moisture from it, and a guide surface lubricating oil feed device. These peripheral devices often used to be installed together at a frame for peripheral device considering space saving, convenience at the time of movement of the machine tool, etc. The frame for peripheral device is placed standing on the floor near the coolant tank and is fastened to the machine body by bolts etc.

### [CITATION LIST]

### [PATENT LITERATURE]

[PTL 1] Japanese Patent No. 4815896

### SUMMARY

### [TECHNICAL PROBLEM]

A coolant tank usually includes a filter for removing chips from the coolant. For this reason, regular maintenance is required for cleaning, replacing, and otherwise maintaining the filter. In the past, for maintenance, the direction of movement when pulling out the coolant tank from a fixed position adjoining the machine body has been limited to a predetermined single direction in order to avoid interference between the coolant tank and the support columns of the peripheral device frame. Due to this, deterioration of the work efficiency in movement of the coolant tank, that is, the work efficiency when the coolant tank is moved close to and away from the machine body, had been caused.

The present invention is made in consideration of the above situation and has as its object to provide a machine tool facilitating the work of moving a coolant tank close to and away from a machine body in routine maintenance.

### [SOLUTION TO PROBLEM]

To achieve the above-mentioned object, according to the present invention, there is provided a machine tool supplying coolant to a processing part and processing a workpiece by a tool, the machine tool comprising a machine body having a mechanism making the tool and the workpiece move relative to each other, a control panel housing a control device controlling operation of the machine body, a peripheral device frame adjoining one side surface of the machine body and with a substantially rectangular shape in a top view for mounting a peripheral device, wherein at least two corners of one end of the rectangular shape are supported, a corner of the other end of the rectangular shape at a side close to the machine body is supported from below, and a corner of the other end of the rectangular shape at a side far from the machine body is not supported from below, and a coolant filtration and supply device having a coolant tank arranged below the peripheral device frame so as to hold the coolant discharged from the machine body, the coolant filtration and supply device being set to be able to approach and move away from the machine body.

### [ADVANTAGEOUS EFFECTS OF INVENTION]

According to this, the peripheral device frame does not have a support column at the corner of the other end at the side far from the machine body, so it becomes possible to increase the degree of freedom in the direction of movement of the coolant filtration and supply device. The direction of movement can be made any direction within a 90 degree range of angle. As a result, it becomes possible to facilitate the work for moving the coolant filtration and supply device to and away from the machine body.

### BRIEF DESCRIPTION OF DRAWINGS

FIG. 1 is a perspective view of a machine tool according to an embodiment of the present invention as seen from a back surface side.
FIG. 2 is a perspective view of the machine tool from which a coolant filtration and supply device is removed as seen from a back surface side.
FIG. 3 is a perspective view of a peripheral device frame.
FIG. 4 is a perspective view showing a mounting member of the peripheral device frame and loose fitting members attached to the same.
FIG. 5A is a schematic sectional view of a part to which a loose fitting member is attached showing the state where the peripheral device frame is engaged with the machine body by the loose fitting member.
FIG. 5B is a schematic sectional view of a part to which the loose fitting member is attached showing the state where the peripheral device frame is firmly joined with the machine body using the loose fitting member.

### DESCRIPTION OF EMBODIMENTS

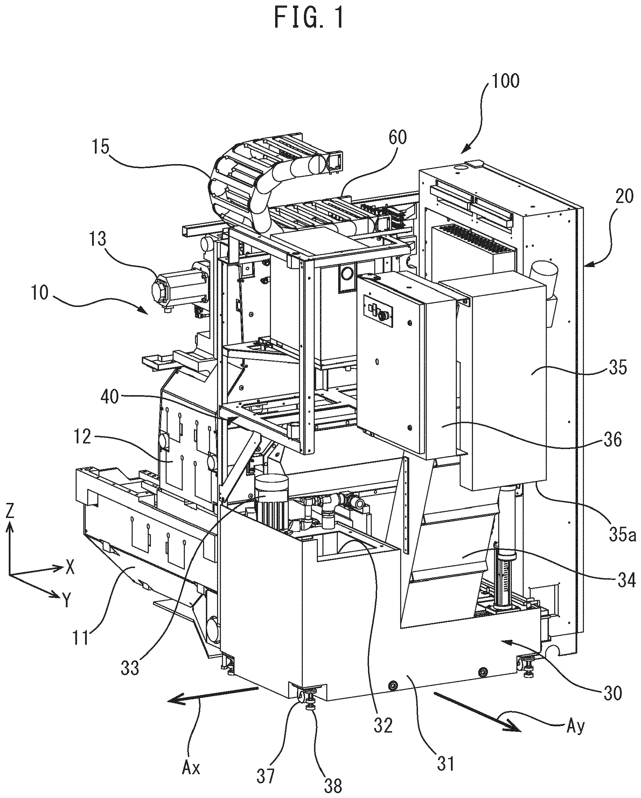

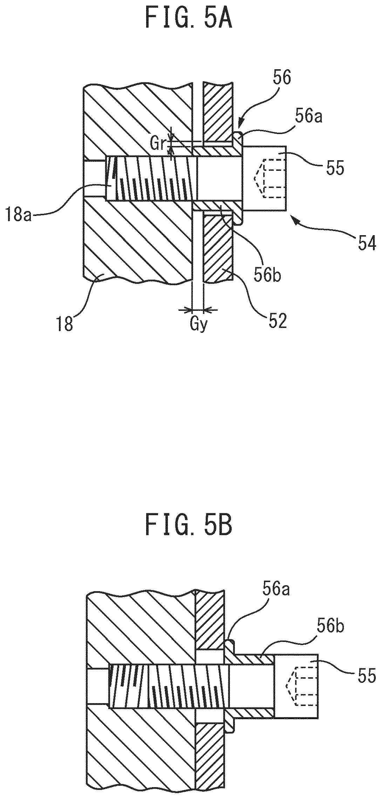

Below, referring to FIG. 1 to FIG. 5B, a machine tool 100 according to one embodiment of the present invention will be explained. The machine tool 100 of this embodiment is configured as a vertical machining center comprising a machine body 10, control panel 20, coolant filtration and supply device 30, peripheral device 60, and peripheral device frame 40 carrying the peripheral device 60. Note that, the machine body 10, control panel 20, coolant filtration and supply device 30, and peripheral device 60 are known general ones, so the explanations will be kept simple.

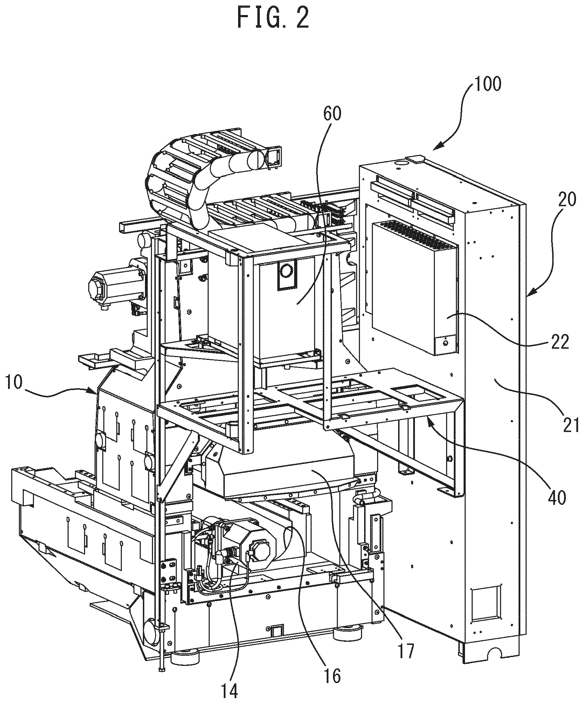

In FIG. 1 and FIG. 2, as the peripheral device 60, an air dryer for cleaning pressurized air source air and removing moisture from it is illustrated. In FIG. 1 and FIG. 2, in this way, a single peripheral device 60 is drawn as a representative device, but the peripheral device frame 40 usually carries a plurality of peripheral devices in addition to an air dryer such as a not shown, for example, spindle lubricating oil temperature control device and guide surface lubricating oil feed device. The peripheral devices 60 may include compressors or pumps or other rotary devices. FIG. 1 is a perspective view of the machine tool 100 from which splash guards and other covers of the machine tool body 10 are removed for facilitating understanding and as seen from the back surface side. FIG. 2 is a perspective view of the machine tool 100 in the state further removing the coolant filtration and supply device 30 and as again seen from the back surface side.

The machine body 10 is provided with a bed 11 placed on a floor surface, a column 12 placed on and fastened to the bed 11, a saddle, not shown in FIG. 1 and FIG. 2, which is designed to be able to move across the front side of the column 12 in the X-axis direction by an X-axis motor 13, a spindle head designed to be able to move across the front side of the saddle in the Z-axis direction with respect to the saddle, a table designed to be able to move over the bed 11 in the Y-axis direction, a Y-axis motor 14 for table feed use shown in FIG. 2, etc. Above the machine body 10, a cable guide 15 is arranged. The machine body 10 is also provided with a groove, that is, trough (not shown), receiving coolant and chips dropping down from the processing part and flowing to the back of the machine. The trough is set on a U-shaped groove 16 formed on the bed 11 shown in FIG. 2. Its front end part sticks out to the back from the back surface of the machine body 10 so that coolant and chips drop down from the front end part to the coolant tank 32 of the coolant filtration and supply device 30 below it. Further, the machine body 10 is also provided with a back surface splash guard 17 attached to the back surface and prevents the coolant and chips in the processing chamber from splashing backward.

The control panel 20, in the present embodiment, is placed standing independently from the machine body 10 at the right side in FIG. 1 at the back surface side of the machine body 10 and is provided with a box shaped housing 21 set on the floor surface. At the outside of the back surface of the housing 21 of the control panel 20, an amp housing box 22 of the feed motor is attached.

The coolant filtration and supply device 30 comprises a filtration and supply device housing 31, coolant tank 32, coolant feed pump 33, liftup chip conveyor 34, chip guide 35, control panel 36 of the coolant filtration and supply device 30, and not shown filter. The coolant filtration and supply device 30 is set adjoining the back surface of the machine body 10 so that the housing 31 abuts against the back surface of the machine body 10. The filtration and supply device housing 31 is formed in a substantially rectangular shape from a top view and is formed in a step shape in a side view from the back surface side of the machine tool 100, the coolant tank 32 is formed mainly at the part of the left side of FIG. 1, and chips are separated at the low part at the right side. The coolant receiving port of the coolant tank 32 for receiving the coolant and chips flowing down from the trough (not shown) is not shown, but is provided at the low part at the right side of the filtration and supply device housing 31 at a side close to the machine body 10. The coolant after filtering of the chips is recirculated by the coolant feed pump 33 to the machine body 10. The separated chips are lifted up by the liftup chip conveyor 34 and dropped down from the chip drop opening 35a at the bottom end of the chip guide 35. Note that, while not shown, usually a chip collecting container is placed by the user under the chip drop opening 35a. Further, at the four corners of the bottom surface of the filtration and supply device housing 31, casters 37 for movement use and stoppers 38 for preventing movement are attached.

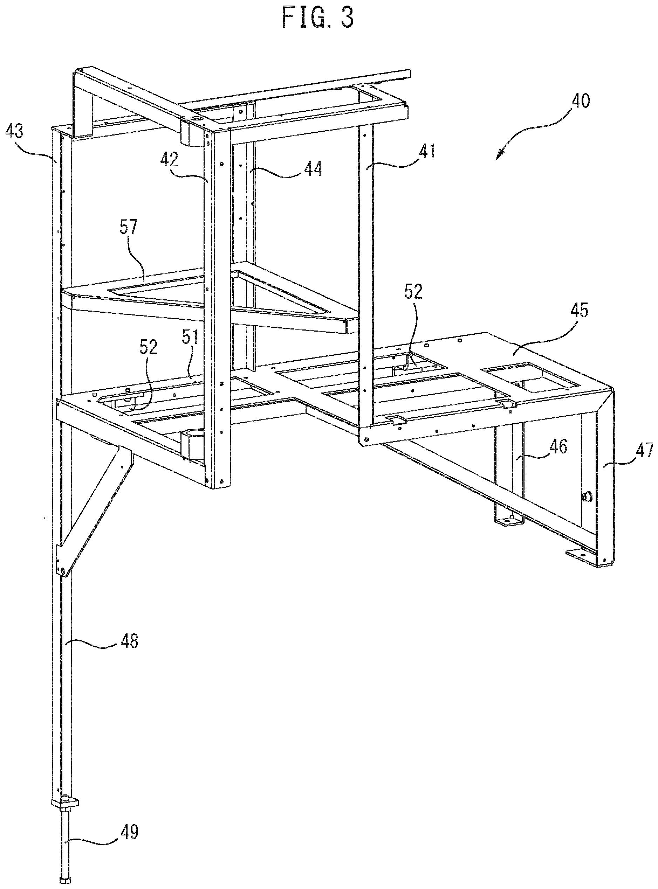

The peripheral device frame 40 is formed as a frame structure such as shown in the independent perspective view of FIG. 3. The peripheral device frame 40 has a main shelf part 45 on which the peripheral device 60 can be placed in the middle of the top-bottom direction. The main shelf part 45 has a substantially rectangular contour from a top view despite having a recess at the left side of FIG. 3. From the region at the left side of the main shelf part 45, a first column member 41 to a fourth column member 44 are provided. These are connected to each other at their top end parts by a plurality of members extending horizontally. Inside the space formed by the first column member 41 to the fourth column member 44 as well, an auxiliary shelf part 57 is formed. One of the peripheral devices 60, as shown in FIG. 1, an air dryer, is placed on the auxiliary shelf part 57. Further, in a plan view of the peripheral device frame 40 as a whole as well, the peripheral device frame 40 has a substantially rectangular contour, as will be understood from FIG. 3.

The peripheral device frame 40 has a first support column 46 and a second support column 47 at the two corners of the rectangular shape of the main shelf part 45 in the front-back direction of one end adjoining the control panel 20. The first support column 46 and second support column 47, in the present embodiment, are bolted to the back surface of the housing 21 of the control panel 20 and do not reach the floor surface. The peripheral device frame 40 has a third support column 48 supporting from the bottom the corner of the main shelf part 45 at the other end at the opposite side of the above end at the side close to the machine body 10. The third support column 48, in the present embodiment, is formed continuously integrally with the third column member 43. The third support column 48 is supported by contacting the floor surface with a length adjuster 49 provided at its front end part. In this way, the peripheral device frame 40 is not supported from the bottom at the corner at the other end at a side far from machine body 10. The peripheral device frame 40 is placed standing together with the control panel 20 independent from the machine body 10 at a position adjoining the machine body 10.

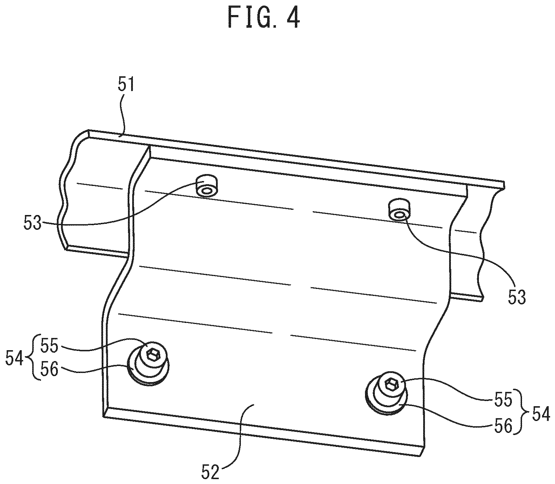

The peripheral device frame 40 has step shaped mounting members 52 such as shown in FIG. 4 for connecting it to the machine body 10. The peripheral device frame 40 is engaged by the member 51 extending to the left and right at the machine body 10 side of the main shelf part 45 at two locations to a structural member 18 of the machine body 10 through the mounting members 52 to be able to move in a predetermined range. The mounting members 52 are firmly fastened to the member 51 of the main shelf part 45 of the peripheral device frame 40 by fastening bolts 53, but is engaged with the structural member 18 of the machine body 10 by the loose fitting members 54 to be able to move within a predetermined range.

Each loose fitting member 54 is comprised of a bolt 55 and a flanged bush 56 through which the bolt 55 is inserted. The flanged bush 56 has a cylindrical shaped bush part 56b and a flange 56a formed integrally with one end of the same. As shown in FIG. 5A, usually, the bush part 56b of the flanged bush 56 is inserted into a mounting hole provided at the mounting member 52 and the bolt 55 is screwed into a screw hole 18a provided at the structural member 18. At this time, the dimensions of the inside diameter of the mounting hole are determined with respect to the outside diameter of the bush part 56b so that a gap Gr is formed in the radial direction. Further, the length of the bush part 56b is determined with respect to the thickness of the mounting member 52 so that a gap Gy is formed in the longitudinal axis direction of the bolt 55, that is, the Y-axis direction.

In this way, the mounting members 52 firmly fastened to the peripheral device frame 40 are engaged by the loose fitting members 54 so as to form a gap Gy with respect to the machine body 10 and form a gap Gr with respect to the flanged bush 56 but so as not to be separated by over the gap Gy. For this reason, propagation of vibration generated by a pump or compressor or other rotary device of the peripheral device 60 placed on the peripheral device frame 40 to the machine body 10 is reduced, and transmission of heat generated by the peripheral device 60 to the machine body 10 is also reduced. These vibration and heat reduce the processing precision of the machining operation performed by the machine body 10, so the detrimental effect on the processing precision of the machine body 10 is also reduced due to the reduction in propagation or transmission of vibration and heat.

Further, the first and second support columns 46, 47 are fastened to the housing of the relatively large control panel 20, so even if the corner of the other end of the main shelf part 45 at the side far from the machine body 10 is not supported from below by a support column, the peripheral device frame 40 can stand independently integral with the control panel 20. However, the loose fitting members 54 are provided for preventing the peripheral device frame 40 from gradually moving and separating from the machine body 10 together with the control panel 20 due to the vibration of the peripheral device 60. Further, the loose fitting members 54 are useful for preventing the peripheral device frame 40 and the control panel 20 from falling over at the time of an earthquake.

As explained above, in the machine tool 100 according to the present embodiment, the peripheral device frame 40 does not have a support column at the corner of the other end of the main shelf part 45 at the side far from the machine body 10, so a high degree of freedom is given to the direction of movement in the case of pulling the coolant filtration and supply device 30 away from the machine body 10 at the time of maintenance of the same or in the case of returning it to the fixed position shown in FIG. 1 after maintenance. The direction of movement specifically may be directions shown by the intersecting arrow Ax and arrow Ay in FIG. 1 and directions of any angles between these arrows. According to this embodiment, the degree of freedom of the coolant filtration and supply device 30 in the direction of movement at the time of maintenance is raised, so the conditions for setting the machine tool 100 relative to other devices which will be arranged around the machine tool 100 and relative to the distance from the wall surface of the factory and the direction of the wall surface are eased and the work efficiency of movement of the coolant filtration and supply device 30 is also raised.

In the present embodiment, the peripheral device frame 40 is usually engaged with the machine body 10 so as to enable movement in the range of the gap formed by the loose fitting members 54, but the peripheral device frame 40 may also be firmly fastened to the machine body 10 for example at the time of transport of the machine tool 100. As shown in FIG. 5B, it is possible to firmly join the peripheral device frame 40 to the machine body 10 by attaching the flanged bushes 56 to the bolts 55 in the reverse direction front to back to the case of FIG. 5A. By attaching the flanged bushes 56 to the bolts 55 as shown in FIG. 5A at the time of installation after the end of transport, as explained above, it is possible to engage the peripheral device frame 40 with the machine body 10 to be able to move within a predetermined range. In this Description, the state of the loose fitting member 54 shown in FIG. 5A will be called the "loose fitting engaged state having a gap", while the state of the loose fitting member 54 shown in FIG. 5B will be called the "joined state eliminating the gap".

### Other Embodiments

The first and second support columns at one end of the rectangular shape of the main shelf part of the peripheral device frame may also be supported at the floor surface in the same way as the third support column 48 while not being fastened to the control panel 20. In this case, it is not possible to support by support columns the turning moment, generated in almost all cases in accordance with a position of the center of gravity of the plurality of peripheral devices 60 as a whole placed on the peripheral device frame as seen from a plan view, acting so as to separate the peripheral device frame from the machine body 10. However, even if such a turning moment is generated, this is supported by the loose fitting members 54, so it is also possible to realize the peripheral device frame which has the first to third support columns supported at the floor surface but does not have a support column at the corner of the other end of the main shelf part at the side far from the machine body 10.

### REFERENCE SIGNS LIST

10 machine body
20 control panel
30 coolant filtration and supply device
32 coolant tank
40 peripheral device frame
45 main shelf part
46 first support column
47 second support column
48 third support column
52 mounting member
54 loose fitting member
55 bolt
56 flanged bush
60 peripheral device
100 machine tool

## Claims

1. A machine tool supplying coolant to a processing part and processing a workpiece by a tool, the machine tool comprising:
a machine body having a mechanism making the tool and the workpiece move relative to each other;
a control panel housing a control device controlling operation of the machine body;
a peripheral device frame adjoining one side surface of the machine body and with a substantially rectangular shape from a top view for mounting a peripheral device, wherein at least two corners of one end of the rectangular shape are supported, a corner of the other end of the rectangular shape at a side close to the machine body is supported from below, and a corner of the other end of the rectangular shape at a side far from the machine body is not supported from below; and
a coolant filtration and supply device having a coolant tank arranged below the peripheral device frame so as to hold the coolant discharged from the machine body, the coolant filtration and supply device being set to be able to move close to and away from the machine body.

2. The machine tool according to claim 1, further comprising a loose fitting member making the peripheral device frame engage with the machine body so that the peripheral device frame will not separate from the machine body by over a predetermined distance.

3. The machine tool according to claim 1 or 2, wherein
the control panel is set adjoining the machine body, and
the two corners of the one end of the rectangular shape of the peripheral device frame are fastened to a housing of the control panel.

4. The machine tool according to claim 2, wherein
the loose fitting member comprises a bolt and a flanged bush through which the bolt is inserted, and
the loose fitting member can take a joined state with no gap and a loose fitting engaged state with a gap at a time of transport and time of installation of the machine tool by attaching the flanged bush facing backward and forward.
